# EUROPÄISCHE PATENTSCHRIFT

(11) **EP 3 840 983 B1**
(45) Veröffentlichungstag und Bekanntmachung des Hinweises auf die Patenterteilung: **04.01.2023**
(21) Anmeldenummer: 19761792.1
(22) Anmeldetag: 22.08.2019
(51) Int. Cl.: B60N 2/28, B60N 2/68

(54) **HALTEEINRICHTUNG FÜR EINEN KINDERSITZ, FAHRZEUGSITZ UND VERFAHREN ZUR HERSTELLUNG**
ANCHORAGE DEVICE FOR A CHILD SEAT, VEHICLE SEAT AND MANUFACTORING PROCESS
ANCRAGE POUR SIÈGE ENFANT, SIÈGE DE VÉHICULE ET PROCÉDÉ DE FABICATION

(30) Priorität: 24.08.2018 DE 102018214358
(43) Veröffentlichungstag der Anmeldung: 30.06.2021
(73) Patentinhaber: VOLKSWAGEN AKTIENGESELLSCHAFT, 38440 Wolfsburg (DE)
(72) Erfinder: HARTWIG, Fred, 38300 Wolfenbüttel (DE)
(86) Internationale Anmeldenummer: PCT/EP2019/072529
(87) Internationale Veröffentlichungsnummer: WO 2020/039050

(56) Entgegenhaltungen:
- US-A1- 2004 227 384
- US-A1- 2010 156 165

## Beschreibung

Die Erfindung betrifft eine Halteeinrichtung für einen auf einem Fahrzeugsitz anordenbaren Kindersitz, mit einem Querträger, der an Seitenteilen des Fahrzeugsitzes befestigbar ist, wobei an dem Querträger zumindest ein bügelförmiges Halteelement für den Kindersitz angeordnet ist.

Weiterhin betrifft die Erfindung einen Fahrzeugsitz für ein Kraftfahrzeug, mit einem Sitzteil und mit einer an dem Sitzteil angeordneten Rückenlehne, sowie mit der oben genannten Halteeinrichtung, deren zumindest eines bügelförmiges Halteelement zwischen Sitzteil und Rückenlehne vorsteht.

Außerdem betrifft die Erfindung ein Verfahren zum Herstellen der oben genannten Halteeinrichtung.

Halteeinrichtungen, Fahrzeugsitze und Verfahren zur Herstellung dieser sind aus dem Stand der Technik bereits bekannt. So offenbart beispielsweise die Offenlegungsschrift DE 200 00 740 U1 eine gattungsgemäße Halteeinrichtung. Diese weist einen Quersteg auf, der an seinen freien Endstirnseiten an Seitenteilen eines Fahrzeugsitzes befestigbar, beispielsweise verschraubbar ist. Der Querträger trägt mehrere Halteelemente, die bügelförmig ausgebildet sind und zur Befestigung eines Kindersitzes dienen. Derartige Halteeinrichtungen sind in der Fachwelt unter der Bezeichnung "Isofix-Kindersitzbefestigungen" bekannt geworden und mittlerweile weit verbreitet. Auch die Offenlegungsschrift DE 199 45 321 C1 offenbart eine derartige Halteeinrichtung. Weitere Halteeinrichtungen sind aus den Offenlegungsschriften US 2004/227384 A1 und US 2010/156165 A1 bekannt.

Der Erfindung liegt die Aufgabe zugrunde, eine verbesserte Halteeinrichtung zu schaffen, die einerseits kostengünstig herstellbar ist und andererseits zu einer Verbesserung des Fahrzeugsitzes insgesamt sowie der Halteeinrichtung selbst führt.

Die der Erfindung zugrundeliegende Aufgabe wird durch eine Halteeinrichtung mit den Merkmalen des Anspruchs 1 gelöst. Diese hat den Vorteil, dass die Halteeinrichtung ein geringes Gewicht aufweist und dennoch die ausreichende Tragfähigkeit bietet, um einen Kindersitz sicher an dem Fahrzeugsitz zu halten. Erfindungsgemäß ist hierzu vorgesehen, dass der Querträger und die Halteelemente einstückig aus Kunststoff gefertigt sind und zumindest eine Faserverstärkung aufweisen. Durch die Herstellung des Querträgers aus Kunststoff wird das Gewicht im Vergleich zu bisher bekannten Querträgern, die aus Stahl gefertigt werden, erheblich reduziert. Dadurch, dass die Halteelemente einstückig mit dem Querträger ausgebildet sind, ergibt sich außerdem ein insgesamt einfacher Aufbau der Halteeinrichtung und eine hohe Stabilität. Durch die Faserverstärkung wird außerdem die Belastbarkeit der Halteeinrichtung erhöht, sodass diese der Belastbarkeit einer herkömmlichen Stahl-Halteeinrichtung zumindest entspricht. Die Halteeinrichtung ist darüber hinaus einfach durch ein Spritzgießverfahren herstellbar, sodass eine einfache Anformung beziehungsweise Anpassung insbesondere des Querträgers an unterschiedliche Fahrzeugsitze möglich ist.

Bevorzugt ist die Faserverstärkung als Glasfaserverstärkung ausgebildet. Hierdurch ergibt sich eine hohe Belastbarkeit der Halteeinrichtung.

Erfindungsgemäß ist die Faserverstärkung als Faserwickel, insbesondere Glasfaserwickel ausgebildet. Damit ist die Faserverstärkung in der Art einer Endlosfaser, insbesondere Glasfaser ausgebildet, die gewickelt vorliegt, sodass durch mehrere Wicklungen ein Faserbündel aus einer Faser entsteht, das hochbelastbar und in den Querträger vorteilhaft integrierbar ist.

Besonders bevorzugt ist das Faserwickel U-förmig gewickelt. Damit erstreckt sich die FaserVerstärkung in dem Querträger U-förmig und verstärkt damit die Robustheit der Halteeinrichtung vorteilhaft.

Besonders bevorzugt weist das U-förmige Faserwickel an seinen freien Enden jeweils einen Wickelkopf mit einer Wickelöffnung auf, der breiter ausgebildet ist als das Faserwickel zwischen den freien Enden. Hierdurch wird zum einen das Herstellen des Glasfaserwickels vereinfacht, weil durch die Wickelöffnung am Wickelkopf die Möglichkeit gegeben ist, die Faser um einen Dorn herum einfach zu wickeln, um die U-Form zu erhalten, ohne dass die Faser durch eine kritische Biegebeanspruchung überlastet wird. Zum anderen bietet der verbreiterte Wickelkopf den Vorteil einer günstigen Halterung oder Verankerung in dem Kunststoffmaterial des Querträgers.

Bevorzugt erstreckt sich der Faserwickel entlang des zumindest einen Halteelements und ist von dem Kunststoff umfasst. Dadurch verstärkt der Faserwickel insbesondere die Belastbarkeit des an dem Querträger angeordneten Halteelements. Besonders bevorzugt liegen die Wickelköpfe des Faserwickels in dem Querträger und sind dort von dem Kunststoff umfasst, sodass die Halteelemente durch die Wickelköpfe in dem Querträger verankert sind.

Weiterhin ist bevorzugt vorgesehen, dass an dem Querträger mehrere, insbesondere drei bügelförmige Halteelemente angeordnet sind. Dadurch ergibt sich eine vielseitige Verwendung der Halteeinrichtung. Insbesondere ergibt sich eine sichere Verwendung der Halteeinrichtung für ein "Isofix-Kindersitzsystem" sowie eine vorteilhafte Halterung an dem Fahrzeugsitz selbst. So kann beispielsweise ein drittes der Halteelemente zur zusätzlichen Arretierung des Querträgers an dem Fahrzeugsitz dienen oder genutzt werden. Optional ist zumindest zweien, vorzugsweise jedem der Halteelemente jeweils ein Faserwickel, wie es vorstehend beschrieben wurde, zugeordnet, sodass diese Halteelemente eine hohe Belastbarkeit aufweisen.

Gemäß einer bevorzugten Weiterbildung der Erfindung erstreckt sich das Faserwickel zumindest entlang des einen Halteelements, zumindest Abschnittsweise durch den Querträger und entlang zumindest eines weiteren Halteelements. Dadurch werden mehrere Halteelemente von dem einen Faserwickel durchdrungen und es ergibt sich ein vorteilhafter Zusammenhalt der Halteeinrichtung insgesamt.

Der erfindungsgemäße Fahrzeugsitz mit den Merkmalen des Anspruchs 8 zeichnet sich durch die erfindungsgemäße Halteeinrichtung aus. Es ergeben sich hierdurch die bereits genannten Vorteile.

Das erfindungsgemäße Verfahren mit den Merkmalen des Anspruchs 9 zeichnet sich dadurch aus, dass der Querträger und das zumindest eine Halteelement einstückig aus Kunststoff hergestellt, insbesondere spritzgegossen werden, und dass zumindest eine als Faserwickel ausgebildete Faserverstärkung durch den Kunststoff umfasst wird. Dabei wird insbesondere derart vorgegangen, dass die Faserverstärkung in einer Spitzgussform eingelegt und positioniert und anschließend von dem Kunststoff umspritzt beziehungsweise umgossen wird, um den Querträger mit integriertem Halteelement auszubilden.

Weitere Vorteile und bevorzugte Merkmale und Merkmalskombinationen ergeben sich insbesondere aus dem zuvor Beschriebenen sowie aus den Ansprüchen. Im Folgenden soll die Erfindung anhand der Zeichnung näher erläutert werden. Dazu zeigen
- Figur 1: einen Fahrzeugsitz eines Kraftfahrzeugs in einer vereinfachten perspektivischen Darstellung,
- Figur 2: eine Rückansicht eines Sitzgestells des Fahrzeugsitzes,
- Figur 3: eine vorteilhafte Halteeinrichtung des Fahrzeugsitzes in einer perspektivischen Darstellung, und
- Figur 4: eine Faserverstärkung in einer vereinfachten perspektivischen Darstellung.

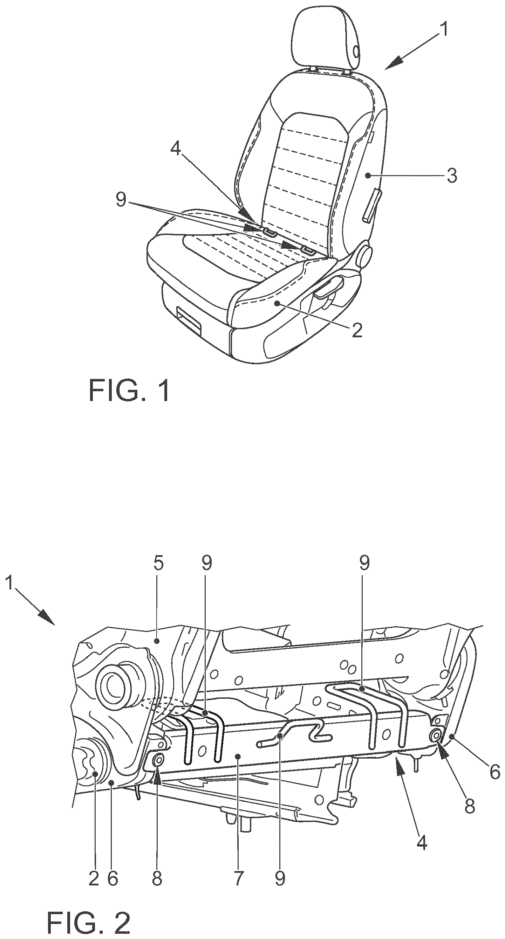

Figur 1 zeigt in einer vereinfachten perspektivischen Darstellung einen Fahrzeugsitz 1 für ein hier nicht näher dargestelltes Kraftfahrzeug. Der Fahrzeugsitz 1 weist ein Sitzteil 2 und eine daran verschwenkbar gelagerte Rückenlehne 3 auf. In dem Bereich, in welchem die Rückenlehne 3 an das Sitzteil 2 angrenzt, ist außerdem eine Halteeinrichtung 4 angeordnet, die zur Befestigung eines Kindersitzes auf dem Fahrzeugsitz 1 dient.

Figur 2 zeigt in einer vereinfachten Darstellung eine Rückansicht des Fahrzeugsitzes 1 im Bereich der Halteeinrichtung 4, wobei die Darstellung von Figur 2 auf die Bepolsterung des Fahrzeugsitzes 1 verzichtet, sodass nunmehr nur das Sitzgestell 5 sichtbar ist. Das Sitzteil 2 weist zwei Seitenteile 6 auf, die parallel zueinander ausgerichtet sind und beispielsweise die Schwenkkinematik für die Rückenlehne 3 tragen. Von dem einen Seitenteil 6 zu dem anderen Seitenteil 6 erstreckt sich dabei ein Querträger 7 der Halteeinrichtung 4. Der Querträger 7 ist endseitig an den Seitenteilen 6 durch jeweils eine Befestigungsschraube 8 befestigt. Weiterhin trägt der Querträger 7 mehrere bügelförmige Halteelemente 9. Zwei dieser Halteelemente 9 ragen durch einen Spalt zwischen Rückenlehne 3 und Sitzteil 2 hindurch, sodass sie von dem Fahrzeugsitz 1 bereichsweise vorstehen, wie beispielsweise in Figur 1 gezeigt. Diese Halteelemente 9 dienen zum Zusammenwirken mit einem Kindersitz, der beispielsweise ein die Bügel die Halteelemente 9 formschlüssig hintergreifendes Sitzschloss aufweisen. Das dritte Halteelement 9, das zwischen den beiden äußeren liegenden Halteelementen 9 angeordnet ist, dient beispielsweise zur weiteren Befestigung an der Fahrzeugsitzstruktur oder zur Befestigung beispielsweise eines Polsterteils des Fahrzeugsitzes 1 an der Halteeinrichtung 4.

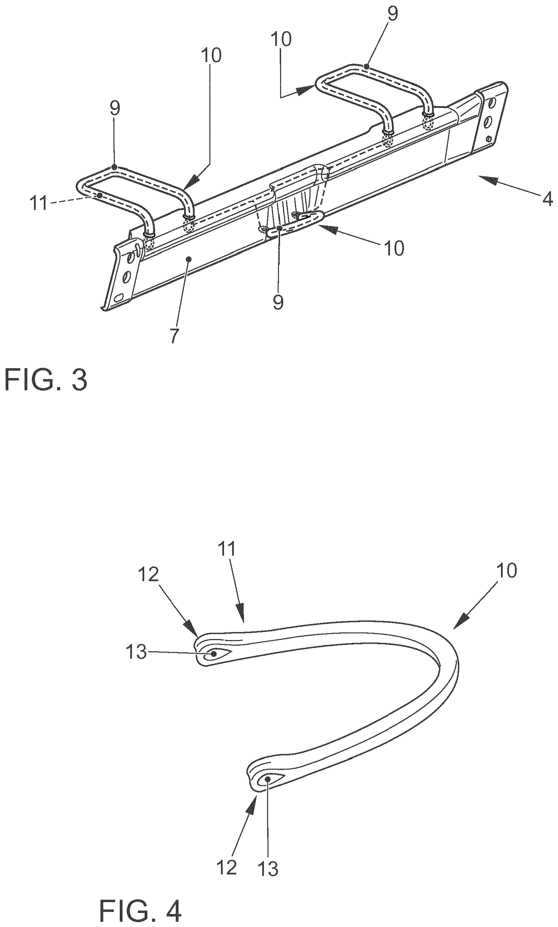

Figur 3 zeigt die Halteeinrichtung 4 in einer vereinfachten perspektivischen Darstellung. Der Querträger 7 sowie die Halteelemente 9 sind aus Kunststoff gefertigt und einstückig miteinander verbunden. Damit wird die Haltevorrichtung 4 in einem einfachen Spritzgießprozess hergestellt. Aufgrund der Verwendung von Kunststoff als Basismaterial der Haltevorrichtung 4 wird das Gesamtgewicht der Haltevorrichtung 4 gegenüber bekannten Lösungen deutlich reduziert. Um die Robustheit beziehungsweise Belastbarkeit der Halteeinrichtung 4 zu gewährleisten, ist in dem Kunststoffmaterial und von dem Kunststoff umschlossen zumindest eine Faserverstärkung 10 eingesetzt.

Die Faserverstärkung 10 ist insbesondere als Glasfaserwickel 11 ausgebildet, wie es in Figur 4 in einer vereinfachten perspektivischen Darstellung gezeigt ist. Das Glasfaserwickel 11 ist U-förmig ausgebildet beziehungsweise gewickelt und weist an seinen freien Enden jeweils einen Wickelkopf 12 auf, der eine Wickelöffnung 13 aufweist. Diese wird beispielsweise dadurch hergestellt, dass eine Endlosglasfaser um zwei schmale Dorne, welche den Durchmesser der Wickelöffnungen 13 definieren, und einen großen Dorn, der die Krümmung des U-förmigen Glasfaserwickels 11 definiert, gewickelt wird. Durch die U-Form eignet sich das Glasfaserwickel für den Einsatz in dem jeweiligen Halteelement 9.

Figur 3 zeigt hierzu mittels gestrichelter Linie den Einsatz jeweils eines Glasfaserwickels 11 in jedem der Halteelemente 9. Durch die Wickelköpfe 12, die breiter sind als der übrige Teil oder Abschnitt des Glasfaserwickels 11, sind die Glasfaserwickel 11 vorteilhaft in Kunststoff im Bereich des Querträgers 7 verankert.

Während gemäß dem vorliegenden Ausführungsbeispiel jedem der Haltemittel 9 ein eigenes Glasfaserwickel 11 zugeordnet ist, das von dem Kunststoff der alternativ hier insbesondere vollständig umgeben ist, ist gemäß einem weiteren Ausführungsbeispiel vorgesehen, wie durch gestrichelte Linie in Figur 3 gezeigt, dass sich auch ein Glasfaserwickel 11 von einem Halteelement bis zu einem anderen Halteelement 9 erstrecken und beide Halteelemente 9 durchdringen kann. Auch ist es möglich, dass sich ein Glasfaserwickel 11 durch alle Halteelemente 9 der Halteeinrichtung 4 erstreckt. Dann weist das Glasfaserwickel 11 mehrere U-förmige Ausformungen auf, die jeweils einem der Halteelemente 9 zugeordnet sind.

Bei der Herstellung werden bevorzugt das oder die Glasfaserwickel 11 in einer Spritzgießform eingelegt und positioniert und anschließend mit Kunststoff umspritzt beziehungsweise gegossen.

Durch die vorteilhafte Integration des der Faserverstärkung 10 in die Halteeinrichtung 4 ergibt sich ein robustes und gewichtssparendes Bauteil, das in dem Fahrzeugsitz 1 integrierbar beziehungsweise integriert ist.

### Bezugszeichenliste

- 1: Fahrzeugsitz
- 2: Sitzteil
- 3: Rückenlehne
- 4: Halteeinrichtung
- 5: Sitzgestell
- 6: Seitenteil
- 7: Querträger
- 8: Befestigungsschraube
- 9: Halteelement
- 10: Faserverstärkung
- 11: Glasfaserwickel
- 12: Wickelköpfe

## Patentansprüche

1. Halteeinrichtung (4) für einen auf einem Fahrzeugsitz (1) anordenbaren Kindersitz, mit einem Querträger (7), der an Seitenteilen (6) des Fahrzeugsitzes (1) befestigbar ist, wobei an dem Querträger (7) zumindest ein bügelförmiges Halteelement (9) für den Kindersitz angeordnet ist, **dadurch gekennzeichnet, dass** der Querträger (7) und das zumindest eine Halteelement (9) einstückig aus Kunststoff gefertigt sind und zumindest eine Faserverstärkung (10) aufweisen, und dass die Faserverstärkung (10) als Faserwickel ausgebildet ist.

2. Halteeinrichtung nach Anspruch 1, **dadurch gekennzeichnet, dass** die Faserverstärkung (10) eine Glasfaserverstärkung ist.

3. Halteeinrichtung nach einem der vorhergehenden Ansprüche, **dadurch gekennzeichnet, dass** das Faserwickel U-förmig gewickelt ist.

4. Halteeinrichtung nach Anspruch 3, **dadurch gekennzeichnet, dass** das U-förmige Faserwickel an seinen freien Enden jeweils einen Wickelkopf (12) mit einer Wickelöffnung (13) aufweist, der breiter ausgebildet ist als das Faserwickel zwischen den freien Enden.

5. Halteeinrichtung nach einem der vorhergehenden Ansprüche, **dadurch gekennzeichnet, dass** sich das Faserwickel entlang des zumindest einen Halteelements (9) erstreckt und von dem Kunststoff umfasst ist.

6. Halteeinrichtung nach einem der vorhergehenden Ansprüche, **dadurch gekennzeichnet, dass** an dem Querträger (7) mehrere, insbesondere drei bügelförmige Halteelemente (9) angeordnet sind.

7. Halteeinrichtung nach einem der vorhergehenden Ansprüche, **dadurch gekennzeichnet, dass** sich das Faserwickel entlang des einen Halteelements (9), zumindest abschnittsweise durch den Querträger (7) und entlang zumindest eines weiteren Halteelements (9) erstreckt.

8. Fahrzeugsitz (1) für ein Kraftfahrzeug, mit einem Sitzteil (2) und mit einer an dem Sitzteil (2) angeordneten Rückenlehne (3), sowie mit einer Halteeinrichtung (4) für einen auf den Fahrzeugsitz (1) anordenbaren Kindersitz, mit einem Querträger (7), der an Seitenteilen (6) des Fahrzeugsitzes (1) befestigt ist und zumindest ein bügelförmiges Halteelement (9) für den Kindersitz aufweist, das insbesondere zwischen Sitzteil (2) und Rückenlehne (3) vorsteht, **gekennzeichnet durch** die Ausbildung der Halteeinrichtung (4) nach einem der Ansprüche 1 bis 7.

9. Verfahren zum Herstellen einer Halteeinrichtung (4) für einen auf einen Fahrzeugsitz (1) anordenbaren Kindersitz, die einen Querträger (7), der an Seitenteilen (6) des Fahrzeugsitzes (1) befestigbar ist und zumindest ein bügelförmiges Halteelement (9) für den Kindersitz aufweist, **dadurch gekennzeichnet, dass** der Querträger (7) und das zumindest eine Halteelement (9) einstückig aus Kunststoff hergestellt, insbesondere spritzgegossen werden, wobei zumindest eine als Faserwickel ausgebildete Faserverstärkung durch den Kunststoff umfasst ist.

## Claims

1. Retaining device (4) for a child seat that is arrangeable on a vehicle seat (1), having a crossmember (7), which is able to be fastened to side parts (6) of the vehicle seat (1), wherein at least one bracket-like retaining element (9) for the child seat is arranged on the crossmember (7), **characterized in that** the crossmember (7) and the at least one retaining element (9) are manufactured in one piece from plastic and exhibit at least one fibre reinforcement (10), and **in that** the fibre reinforcement (10) is in the form of a fibre winding.

2. Retaining device according to Claim 1, **characterized in that** the fibre reinforcement (10) is a glass fibre reinforcement.

3. Retaining device according to either of the preceding claims, **characterized in that** the fibre winding is wound in a U shape.

4. Retaining device according to Claim 3, **characterized in that** the U-shaped fibre winding has, at each of its free ends, a winding head (12) with a winding opening (13) which is wider than the fibre winding between the free ends.

5. Retaining device according to one of the preceding claims, **characterized in that** the fibre winding extends along the at least one retaining element (9) and is encased by the plastic.

6. Retaining device according to one of the preceding claims, **characterized in that** a plurality of, in particular three bracket-like retaining elements (9) are arranged on the crossmember (7).

7. Retaining device according to one of the preceding claims, **characterized in that** the fibre winding extends along the one retaining element (9), at least partially through the crossmember (7) and along at least one further retaining element (9).

8. Vehicle seat (1) for a motor vehicle, having a seat part (2) and having a backrest (3) arranged on the seat part (2), and having a retaining device (4) for a child seat that is arrangeable on the vehicle seat (1), having a crossmember (7), which is fastened to side parts (6) of the vehicle seat (1) and has at least one bracket-like retaining element (9) for the child seat, said retaining element (9) protruding in particular between the seat part (2) and backrest (3), **characterized by** the retaining device (4) being configured according to one of Claims 1 to 7.

9. Method for producing a retaining device (4) for a child seat that is arrangeable on a vehicle seat (1), said retaining device (4) having a crossmember (7), which is able to be fastened to side parts (6) of the vehicle seat (1) and has at least one bracket-like retaining element (9) for the child seat, **characterized in that** the crossmember (7) and the at least one retaining element (9) are produced in one piece from plastic, in particular are injection moulded, wherein at least one fibre reinforcement in the form of a fibre winding is encased by the plastic.

## Revendications

1. Dispositif de retenue (4) pour un siège d'enfant pouvant être agencé sur un siège de véhicule (1), avec un support transversal (7) qui peut être fixé à des parties latérales (6) du siège de véhicule (1), au moins un élément de retenue (9) en forme d'arceau pour le siège d'enfant étant agencé sur le support transversal (7), **caractérisé en ce que** le support transversal (7) et l'au moins un élément de retenue (9) sont fabriqués d'un seul tenant en matière plastique et présentent au moins un renforcement fibreux (10), et **en ce que** le renforcement fibreux (10) est configuré sous forme d'enroulement de fibres.

2. Dispositif de retenue selon la revendication 1, **caractérisé en ce que** le renforcement fibreux (10) est un renforcement en fibres de verre.

3. Dispositif de retenue selon l'une quelconque des revendications précédentes, **caractérisé en ce que** l'enroulement de fibres est enroulé en forme de U.

4. Dispositif de retenue selon la revendication 3, **caractérisé en ce que** l'enroulement de fibres en forme de U présente à chacune de ses extrémités libres une tête d'enroulement (12) avec une ouverture d'enroulement (13), qui est configurée plus large que l'enroulement de fibres entre les extrémités libres.

5. Dispositif de retenue selon l'une quelconque des revendications précédentes, **caractérisé en ce que** l'enroulement de fibres s'étend le long de l'au moins un élément de retenue (9) et est entouré par la matière plastique.

6. Dispositif de retenue selon l'une quelconque des revendications précédentes, **caractérisé en ce que** plusieurs, notamment trois, éléments de retenue (9) en forme d'arceau sont agencés sur le support transversal (7) .

7. Dispositif de retenue selon l'une quelconque des revendications précédentes, **caractérisé en ce que** l'enroulement de fibres s'étend le long de l'un des éléments de retenue (9), au moins par sections à travers le support transversal (7) et le long d'au moins un autre élément de retenue (9).

8. Siège de véhicule (1) pour un véhicule automobile, avec une partie de siège (2) et avec un dossier (3) agencé sur la partie de siège (2), ainsi qu'avec un dispositif de retenue (4) pour un siège d'enfant pouvant être agencé sur le siège de véhicule (1), avec un support transversal (7), qui est fixé sur des parties latérales (6) du siège de véhicule (1) et qui présente au moins un élément de retenue (9) en forme d'arceau pour le siège d'enfant, qui fait saillie notamment entre la partie de siège (2) et le dossier (3), **caractérisé par** la configuration du dispositif de retenue (4) selon l'une quelconque des revendications 1 à 7.

9. Procédé de fabrication d'un dispositif de retenue (4) pour un siège d'enfant pouvant être agencé sur un siège de véhicule (1), qui présente un support transversal (7) qui peut être fixé sur des parties latérales (6) du siège de véhicule (1) et au moins un élément de retenue (9) en forme d'arceau pour le siège d'enfant, **caractérisé en ce que** le support transversal (7) et l'au moins un élément de retenue (9) sont fabriqués d'un seul tenant en matière plastique, notamment moulés par injection, au moins un renforcement fibreux configuré sous forme d'enroulement de fibres étant entouré par la matière plastique.
